# EUROPEAN PATENT APPLICATION

(11) **EP 3 871 920 A1**
(43) Date of publication of application: **01.09.2021**
(21) Application number: 20187942.6
(22) Date of filing: 27.07.2020
(51) Int. Cl.: B60L 50/64

(54) **BATTERY RESTRAINING STRUCTURE OF AN ELECTRIC VEHICLE**

(30) Priority: 26.02.2020 TW 109202160 U
(71) Applicant: Zhejiang Innuovo Rehabilitation Devices Co. Ltd, Dongyang Zhejiang (CN); Kwang Yang Motor Co., Ltd., Kaohsiung City (TW)
(72) Inventor: TANG, Shuguo, Dongyang, Zhejiang (CN); FU, Chengxian, Dongyang, Zhejiang (CN); SU, Tai-Yuan, Kaohsiung City (TW)
(74) Representative: Melchior, Robin

(57) **Abstract**

A battery restraining structure for an electric vehicle is disposed in a vehicle body (10) and has a base unit (11) having a first receiving space (13), a portable battery pack (20) detachably mounted in the first receiving space (13), two position limiting units (30) disposed on two opposite sides of the portable battery pack (20), and a stop unit (40) disposed between the base unit (11) and the portable battery pack (20). The limiting units (30) and the stop unit (40) prevent the portable battery pack (20) from vibrating up and down or back and forth, such that the portable battery pack (20) can be stably held in the base unit (11) and electric power from the portable battery pack (20) does not be cut off.

## Description

### BACKGROUND

### 1. Field of the Invention

The present invention relates to a battery restraining structure of an electric vehicle, especially to a battery restraining structure that restrains a battery pack in the electric vehicle stably.

### 2. Description of the Prior Art(s)

In recent years, electric vehicles are becoming more and more popular because the electric vehicle is powered by electricity, which reduces exhaust emissions and excludes consumption of petroleum fuel. Therefore, the electric vehicle has become a new choice for scooter riders in recent years. A conventional electric vehicle comprises a vehicle body, a battery frame, an outer cover, and a detachable battery pack. The battery frame is mounted in the vehicle body and has a receiving space. The outer cover is pivotally connected with the battery frame and selectively covers the receiving space. The detachable battery pack is put in the battery frame and is located in the receiving space. When the outer cover covers the receiving space, the detachable battery pack is restrained in the battery frame and would not fall out of the battery frame. Thus, the battery pack is able to provide electric power to the electric vehicle.

However, when the conventional electric vehicle is driving on the road, the electric vehicle vibrates up and down, left and right, and back and forth. As the electric vehicle vibrates, the detachable battery pack vibrates in the battery frame accordingly. Although the detachable battery pack is restrained in the battery frame by the outer cover, relative vibrations of the detachable battery pack and the battery frame causes damage to the detachable battery pack, which works an electronic equipment, easily, or causes shift in relative positions of the detachable battery pack and the battery frame. Consequently, the electric power would be cut off and the conventional electric vehicle is unable to operate, causing even greater danger to the driver of the electric vehicle.

### SUMMARY OF THE INVENTION

The main objective of the present invention is to provide a battery restraining structure for an electric vehicle to mitigate or obviate the aforementioned problems.

The battery restraining structure is disposed in a vehicle body of the electric vehicle and has a base unit, a portable battery pack, two position limiting units, and a stop unit. The base unit has a chassis and a first receiving space defined above the chassis. The portable battery pack is detachably mounted in the base unit and is disposed in the first receiving space. The two position limiting units are disposed on two opposite sides of the portable battery pack. The stop unit is disposed between the base unit and the portable battery pack. The portable battery pack is held in the first receiving space of the base unit by the two position limiting units and the stop unit.

The limiting units on the two opposite sides of the portable battery pack prevent the portable battery pack from vibrating up and down, and the portable battery pack is held in the first receiving space and does not vibrate left and right. Moreover, the stop unit holds the portable battery pack to stay in the first receiving space and prevents the portable battery pack from vibrating back and forth. Accordingly, the portable battery pack can be stably held in the base unit. Stability of the portable battery pack in the base unit can be enhanced to prevent the portable battery pack from vibrating, and electric power from the portable battery pack does not be cut off.

### BRIEF DESCRIPTION OF THE DRAWINGS

The invention will be elucidated on the basis of an exemplary embodiment shown in the attached drawings, in which:
Fig. 1 is a perspective view of a first embodiment of a battery restraining structure of an electric vehicle in accordance with the present invention;
Fig. 2 is an exploded perspective view of the first embodiment of the battery restrain structure of the electric vehicle in Fig. 1, showing a portable battery pack detached from a first receiving space;
Fig. 3 is a perspective view of the first embodiment of the battery restrain structure of the electric vehicle in Fig. 1, showing the portable battery pack placed in the first receiving space;
Fig. 4 is an enlarged cross-sectional side view of the first embodiment of the battery restrain structure of the electric vehicle in Fig. 1, showing a locking rod is pressed downward;
Fig. 5 is an enlarged cross-sectional side view of the first embodiment of the battery restrain structure of the electric vehicle in Fig. 1, showing a push button is pressed;
Fig. 6 is an enlarged cross-sectional side view of the first embodiment of the battery restrain structure of the electric vehicle in Fig. 1, showing the locking rod being restored;
Fig. 7 is an enlarged exploded perspective view of a stop unit of the first embodiment of the battery restrain structure of the electric vehicle in Fig. 1;
Fig. 8 is an exploded perspective view of a second embodiment of a battery restrain structure of the electric vehicle in accordance with the present invention, showing a portable battery pack detached from a first receiving space;
Fig. 9 is a perspective view of the second embodiment of the battery restrain structure of the electric vehicle in Fig. 8, showing the portable battery pack placed in the first receiving space;
Fig. 10 is an enlarged exploded perspective view of a stop unit of the second embodiment of the battery restrain structure of the electric vehicle in Fig. 8;
Fig. 11 is an enlarged cross-sectional side view of the second embodiment of the battery restrain structure of the electric vehicle in Fig. 8;
Fig. 12 is an enlarged cross-sectional side view of the second embodiment of the battery restrain structure of the electric vehicle in Fig. 8, showing a pressing element being pressed;
Fig. 13 is another perspective view of the first embodiment of the battery restraining structure of the electric vehicle in Fig. 1, showing a spare battery pack; and
Fig. 14 is another perspective view of the first embodiment of the battery restraining structure of the electric vehicle in Fig. 1, showing engagement between the spare battery pack and a base unit.

### DETAILED DESCRIPTION OF THE INVENTION

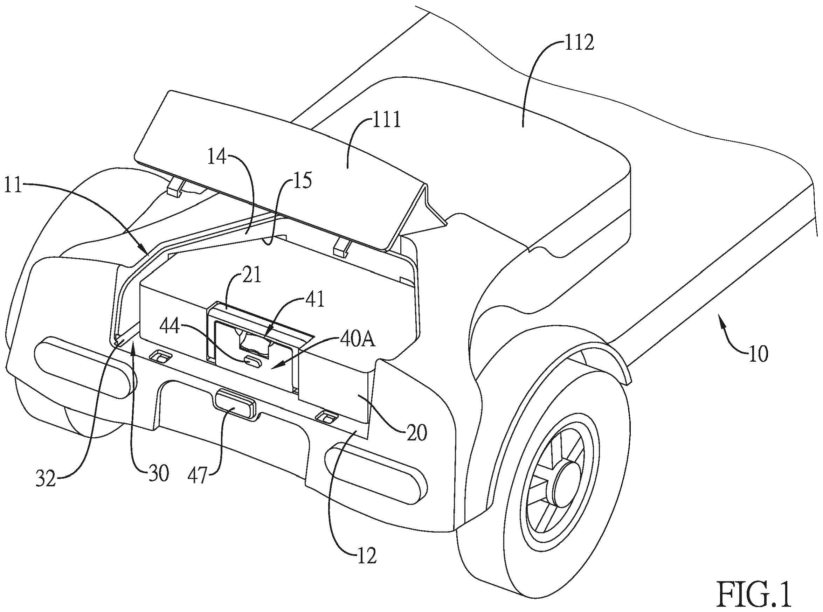

With reference to Figs. 1 to 3, a first preferred embodiment of a battery restraining structure of an electric vehicle or an electric vehicle comprising said battery retraining structure in accordance with the present invention is shown. As shown in the figures, the battery restraining structure of the electric vehicle is disposed on a rear end of a vehicle body 10 of the electric vehicle and comprises a base unit 11, a portable battery pack 20, two position limiting units 30, and a stop unit 40A.

As shown in Figs. 1 to 3, the base unit 11 is disposed on the rear end of the vehicle body 10 and has a chassis 12, a first receiving space 13, and two limiting panels 14. The first receiving space 13 is defined above the chassis 12. The two limiting panels 14 are formed on a front end of the base unit 11 and are disposed above the first receiving space 13. A diagonal recess 15 is formed between each of the limiting panels 14 and the chassis 12.

As shown in Figs. 1 to 3, the portable battery pack 20 is detachably mounted in the base unit 11 and is disposed in the first receiving space 13. The portable battery pack 20 abuts on the chassis 12 and is restrained in the first receiving space 13 with two opposite sides of the portable battery pack 20 being held. The two limiting panels 14 abut on an upper surface of the portable battery pack 20. The portable battery pack 20 has a handle 21 mounted on a rear portion of the portable battery pack 20.

As shown in Figs. 1 to 3, the two position limiting units 30 are disposed on the opposite sides of the portable battery pack 20 respectively. Each of the position limiting units 30 includes a positioning recess 32 and a guiding protrusion 31. The positioning recess 32 is formed in a side portion of the base unit 11 and communicates with the first receiving space 13. The guiding protrusion 31 is disposed on a side surface of the portable battery pack 20 and protrudes in the positioning recess 32. Thus, the portable battery pack 20 is restrained from moving up and down by the two position limiting units 30.

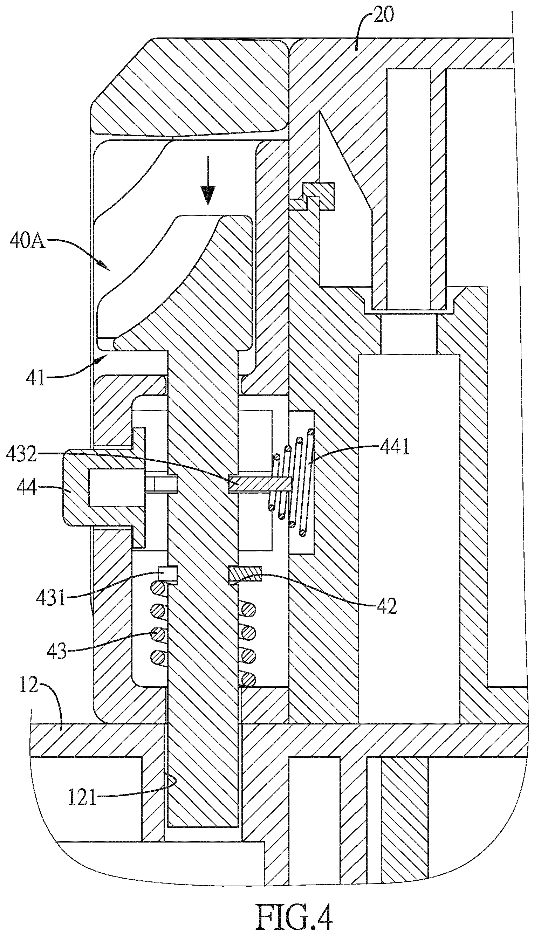

With reference to Fig. 1, 2, and 4, the stop unit 40A is disposed between the base unit 11 and the portable battery pack 20. The portable battery pack 20 is held in the first receiving space 13 of the base unit 11 by the two position limiting units 30 and the stop unit 40A.

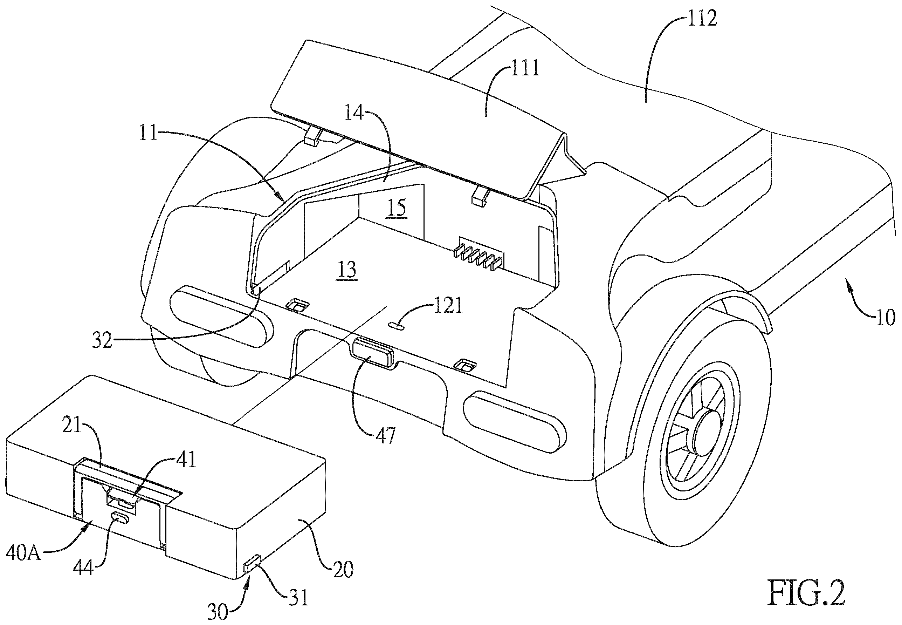

As shown in Figs. 2 to 4, the chassis 12 has a positioning hole 121 disposed adjacent to a rear end of the chassis 12. The stop unit 40A includes a locking rod 41. The locking rod 41 is mounted through the rear portion of the portable battery pack 20 and is slidable up and down. When the portable battery pack 20 is assembled in the first receiving space 13, the locking rod 41 is capable of sliding downward to insert into the positioning hole 121.

More specifically, the locking rod 41 has two notches 42 separately formed in the locking rod 41 with one notch 42 disposed above the other notch 42. The stop unit 40A further includes a first compression spring 43, a first retaining plate 431, and a second retaining plate 432. The first compression spring 43 is mounted around the locking rod 41. The first retaining plate 431 is mounted on the locking rod 41 and engages in the notch 42 that is disposed closer to a lower end of the locking rod 41. The first compression spring 43 is disposed between the first retaining plate 431 and the portable battery pack 20 with two opposite ends of the first compression spring 43 abutting against the first retaining plate 431 and the portable battery pack 20 respectively. The second retaining plate 432 abuts against the portable battery pack 20. When the locking rod 41 is pressed to move downward and the notch 42 that is disposed closer to an upper end of the locking rod 41 corresponds in position to a rear end of the second retaining plate 432, the second retaining plate 432 is capable of engaging in the notch 42 that is disposed closer to the upper end of the locking rod 41 to hold the locking rod 41 at a specific position, and meanwhile the lower end of the locking rod 41 is inserted into the positioning hole 121.

Furthermore, with reference to Figs. 2 to 4, the stop unit 40A includes a push button 44 and a second compression spring 441. The push button 44 is disposed on the rear portion of the portable battery pack 20 and is movable toward the locking rod 41. The push button 44 abuts on the second retaining plate 432 and is capable of pushing the second retaining plate 432 toward the portable battery pack 20 to allow the second retaining plate 432 to disengage from the notch 42 that is disposed closer to the upper end of the locking rod 41. The second compression spring 441 is disposed between the second retaining plate 432 and the portable battery pack 20 with two opposite ends of the second compression spring 441 abutting against the second retaining plate 432 and the portable battery pack 20 respectively.

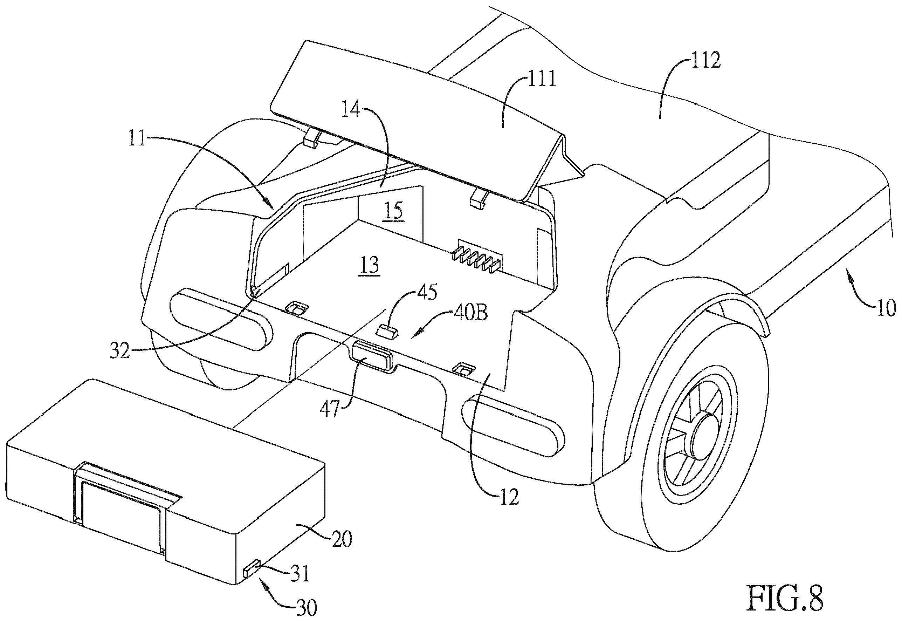

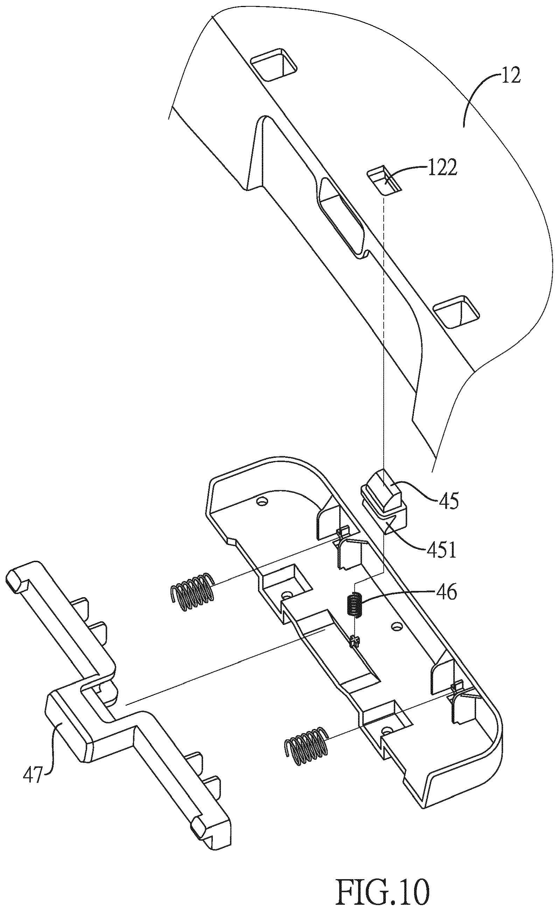

With reference to Figs. 8, 10, and 11, in a second preferred embodiment of a battery restraining structure of an electric vehicle or an electric vehicle comprising a battery restraining structure in accordance with the present invention, the stop unit 40B includes a limiting block 45. The limiting block 45 is mounted on the chassis 12 and is disposed below the first receiving space 13. The chassis 12 has a through hole 122 disposed adjacent to the rear end of the chassis 12 and communicating with the first receiving space 13. The limiting block 45 protrudes through the through hole 122. When the portable battery pack 20 is mounted in the first receiving space 13, the limiting block 45 abuts against the rear portion of the portable battery pack 20.

Specifically, the stop unit 40B includes a resilient element 46 and a pressing element 47. The resilient element 46 is disposed between a bottom surface of the chassis 12 and the limiting block 45. The pressing element 47 is mounted on the rear end of the chassis 12 and abuts on the limiting block 45.

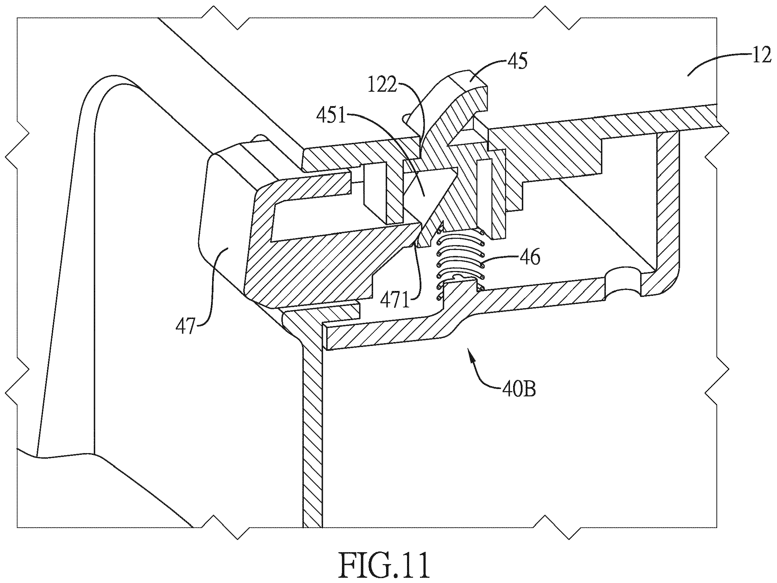

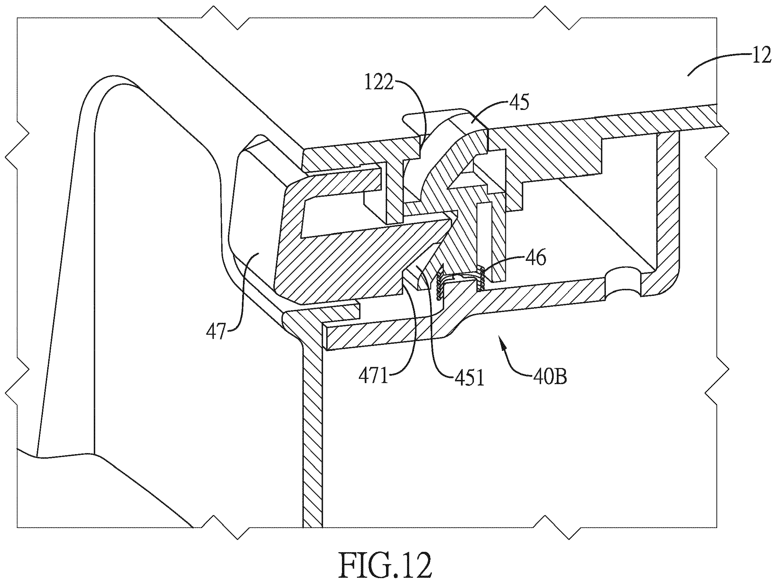

With further reference to Figs. 11 and 12, more specifically, the pressing element 47 has a guiding surface 471. The limiting block 45 has a driven surface 451. When the pressing element 47 is pressed, the guiding surface 471 of the pressing element 47 leans on the driven surface 451 of the limiting block 45 to push the limiting block 45 to move downward.

With reference to Figs. 1, 13, and 14, the battery restraining structure of the electric vehicle further comprises a spare battery pack 50. The spare battery pack 50 has two locating recesses 51 separately arranged on an upper surface of the spare battery pack 50. When the portable battery pack 20 runs out of electric power, the spare battery pack 50 can be used as emergency power supply. The base unit 11 has a second receiving space 16 and two locating protrusions 17. The second receiving space 16 is disposed in front of the first receiving space 13. The two locking protrusions 17 are separately arranged above the second receiving space 16. The spare battery pack 50 is capable of being mounted in the second receiving space 16 with the two locating protrusions 17 engaging in the two locating recesses 51 respectively.

Moreover, the battery restraining structure further comprises a first cover 111, a second cover 112, and a releasing portion 113. The first cover 111 is pivotally mounted on the vehicle body 10 and is capable of covering the first receiving space 13. The second cover 112 is pivotally mounted on the vehicle body 10 and is capable of covering the second receiving space 16. The releasing portion 113 detachably engages with the second cover 112.

As shown in Figs. 1 to 3, in the first preferred embodiment of the battery restraining structure of the electric vehicle, when installing the portable battery pack 20 in the base unit 11, the portable battery pack 20 is mounted in the first receiving space 13 and is placed on the chassis 12. With the guiding protrusions 31 of the two position limiting units 30 on the two opposite sides of the portable battery pack 20 engaging with the positioning recesses 32, the portable battery pack 20 can be held in the base unit 11 to prevent the portable battery pack 20 from vibrating up and down. Moreover, with the stop unit 40A holding the portable battery pack 20 in the first receiving space 13 to prevent the portable battery pack 20 from vibrating back and forth. In addition, as the two opposite sides of the portable battery pack 20 is held in the first receiving space 13, the portable battery pack 20 does not vibrate left and right.

Furthermore, as shown in Figs. 1 to 3, with connection of the guiding protrusions 31 and the positioning recesses 32 of the two positioning limiting units 30, the two guiding protrusions 31 on the opposite sides of the portable battery pack 20 are restrained by the two positioning recesses 32, such that the portable battery pack 20 does not vibrate up and down. Since the guiding protrusions 31 and the positioning recesses 32 are simple connecting structure without unnecessary complicated components and the portable battery pack 20 is stably held without vibrating up and down, electric power does not be cut off. In addition, the two limiting panels 14 of the base unit 11 also limit up-and-down movement of the portable battery pack 20. With two opposite ends of a front portion of the portable battery pack 20 mounting in the two diagonal recesses 15, stability of the portable battery pack 20 can be enhanced as the vehicle body 10 vibrates up and down.

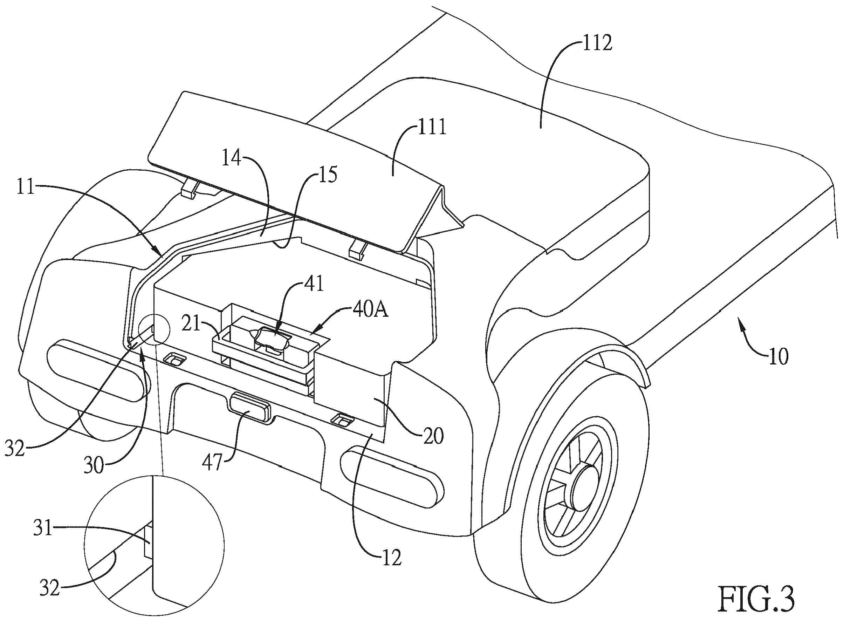

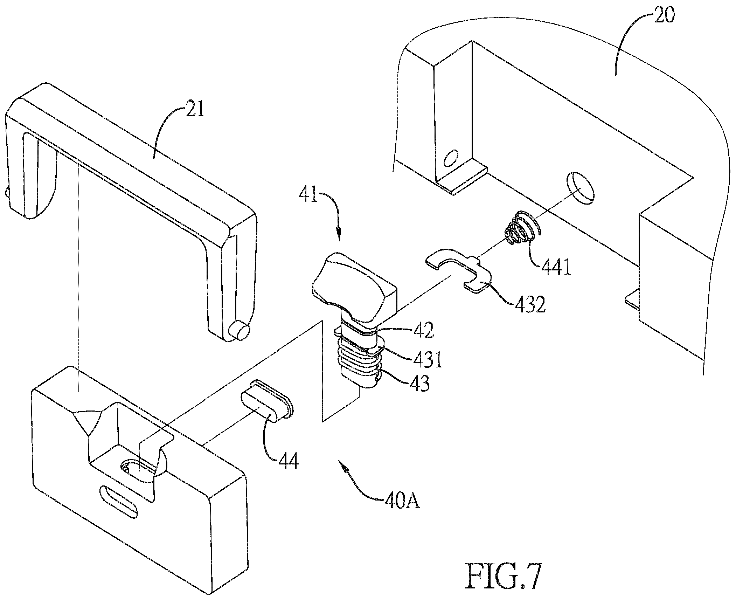

As described above, with reference to Figs. 3, 4, and 7, the first preferred embodiment of the stop unit 40A is shown. The locking rod 41 of the stop unit 40A is inserted in the positioning hole 121 of the chassis 12. Thus, relative position of the portable battery pack 20 and the chassis 12 can be fixed, so as to prevent the portable battery pack 20 from vibrating back and forth.

Specifically, the locking rod 41 is mounted through the rear portion of the portable battery pack 20 and is slidable up and down. When the locking rod 41 is pressed and drives the first retaining plate 431 to move downward, the first compression spring 43 is compressed by the first retaining plate 431 and the portable battery pack 20. A restoring force from the first compression spring 43 pushes the first retaining plate 431 along with the locking rod 41 upward. Thus, when a user presses the locking rod 41 downward, the user has to overcome the restoring force of the first compression spring 43. As the notch 42 that is disposed closer to the upper end of the locking rod 41 corresponds in position to the rear end of the second retaining plate 432, the second retaining plate 432 can be inserted in the notch 42 that is disposed closer to the upper end of the locking rod 41, so as hold the locking rod 41 at the specific position. The first compression spring 43 and the first retaining plate 431 provides the restoring force to the locking rod 41, and the second retaining plate 432 is able to hold the locking rod 41 at the specific position and resist the restoring force from the first compression spring 43.

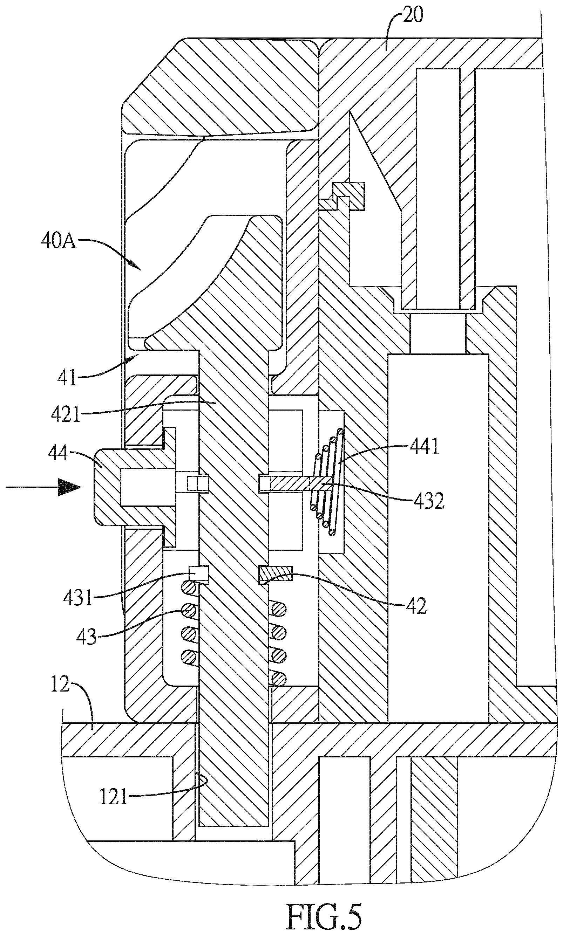

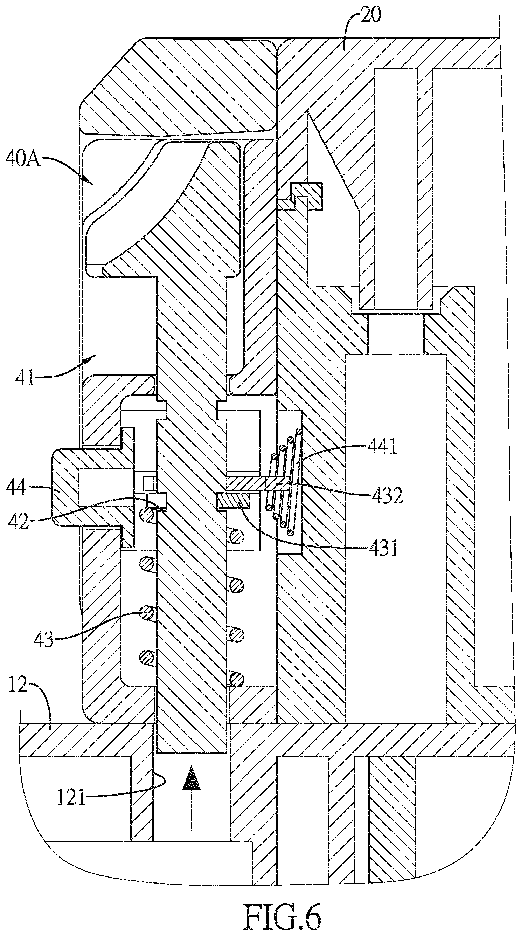

Furthermore, as shown in Figs. 5 to 7, the second compression spring 441 of the stop unit 40A pushes the second retaining plate 432 to move toward the locking rod 41 to allow the second retaining plate 432 to tightly abut the notch 42 that is disposed closer to the upper end of the locking rod 41. The push button 44 can move toward the locking rod 41. Thus, when disengaging the locking rod 41 from the positioning hole 121 to restore the locking rod 41, the push button 44 is pressed to allow the second retaining plate 432 to disengage from the notch 42 that is disposed closer to the upper end of the locking rod 41. Without the second retaining plate 432 that resists the restoring force of the first compression spring 43, the locking rod 41 is pushed to move upward by the restoring force of the first compression spring 43 to disengage from the positioning hole 121. Accordingly, engagement between the portable battery pack 20 and the chassis 12 can be released. By pressing the push button 44 to quickly release the engagement between the portable battery pack 20 and the chassis 12 improves the convenience of replacing the portable battery pack 20. In addition, the portable battery pack 20 can be taken out easily with the handle 21.

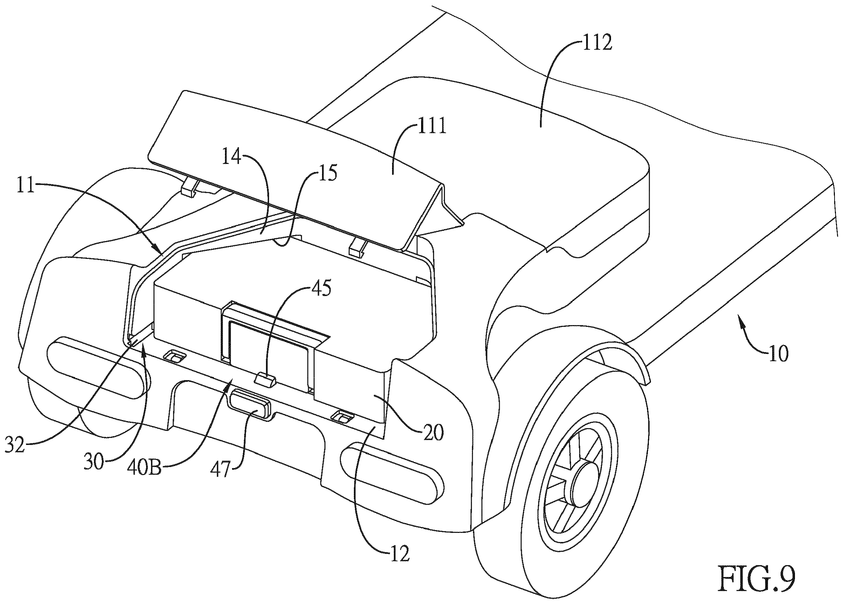

With reference to Figs. 8 to 10, another preferred embodiment of the stop unit 40B is shown. The limiting block 45 of the stop unit 40B protrudes out from the through hole 122 of the chassis 12. When the portable battery pack 20 is placed in the first receiving space 13, the limiting block 45 abuts against the rear portion of the portable battery pack 20 to hold the portable battery pack 20 in the base unit 11 and prevent the portable battery pack 20 from vibrating back and forth.

Specifically, the resilient element 46 of the stop unit 40B provides a restoring force to push the limiting block 45 to protrude out from the through hole 122.

As shown in Figs. 8, 11, and 12, when placing the portable battery pack 20 in the base unit 11 or removing the portable battery pack 20 from the base unit 11, the pressing element 47 is pressed. Then the pressing element 47 protrudes into the chassis 12 and the guiding surface 471 of the pressing element 47 leans on the driven surface 451 of the limiting block 45 to push the limiting block 45 to move downward. The pressing element 47 resists the restoring force from the resilient element 46 to drive the limiting block 45 to retract in the through hole 122. Thus, the portable battery pack 20 can be placed into or removed from the base unit 11 with being hindered.

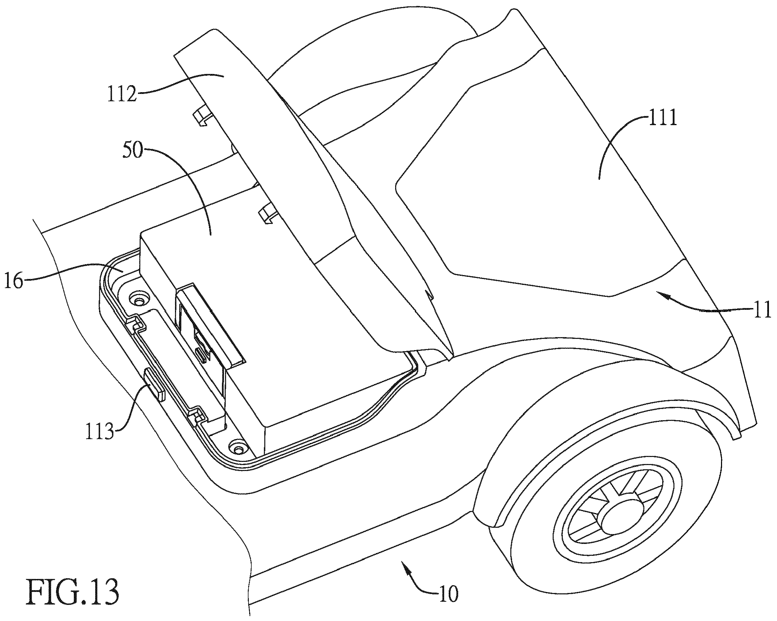

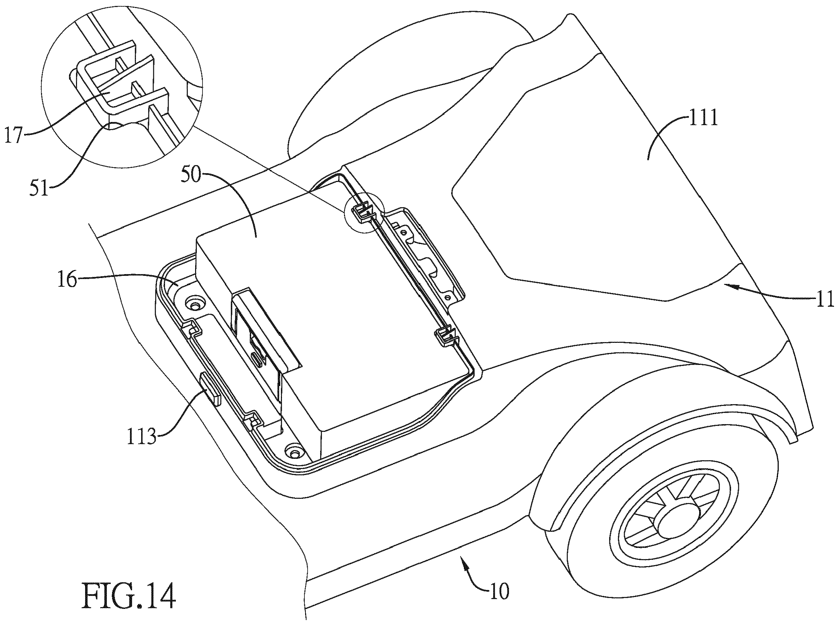

Moreover, as shown in Figs. 13 and 14, the battery restraining structure of the electric vehicle further comprises the spare battery pack 50. The spare battery pack 50 is placed in the second receiving space 16 of the vehicle body 10 with the two locating protrusions 17 above the second receiving space 16 engaging in the two locating recesses 51 of the spare battery pack 50 respectively. When the spare battery pack 50 is placed in the second receiving space 16, the two locating protrusions 17 protrude in the two locating recesses 51 to allow the spare battery pack 50 to stably disposed in the second receiving space 16 without vibrating up and down.

As described above, with reference to Figs. 1 and 13, with the first cover 111 covering the first receiving space 13, when the portable battery pack 20 is placed in the first receiving space 13, the first cover 111 can be closed to cover the portable battery pack 20, or can be opened for placing the portable battery pack 20 or taking the portable battery pack 20 out. Similarly, with the second cover 112 above the second receiving space 16, the spare battery pack 50 in the second receiving space 16 can be covered. Moreover, the releasing portion 113 allows the user to quickly open or close the second cover 112.

In the battery restraining structure of the electric vehicle, the limiting units 30 on the two opposite sides of the portable battery pack 20 prevent the portable battery pack 20 from vibrating up and down, and the portable battery pack 20 is held in the first receiving space 13 and does not vibrate left and right. Moreover, the stop unit 40, 40B holds the portable battery pack 20 to stay in the first receiving space 13 and prevents the portable battery pack 20 from vibrating back and forth. Accordingly, the portable battery pack 20 can be stably held in the base unit 11. Stability of the portable battery pack 20 in the base unit 11 can be enhanced to prevent the portable battery pack 20 from vibrating, such that the electric power of the portable battery pack 20 does not be cut off.

## Claims

1. A battery restraining structure of an electric vehicle, and the battery restraining structure disposed in a vehicle body (10) of the electric vehicle and **characterized in** comprising:
a base unit (11) having
a chassis (12); and
a first receiving space (13) defined above the chassis (12);
a portable battery pack (20) detachably mounted in the base unit (11) and disposed in the first receiving space (13);
two position limiting units (30) disposed on two opposite sides of the portable battery pack (20) respectively; and
a stop unit (40A, 40B) disposed between the base unit (11) and the portable battery pack (20);
wherein the portable battery pack (20) is held in the first receiving space (13) of the base unit (11) by the two position limiting units (30) and the stop unit (40A, 40B) .

2. The battery restraining structure as claimed in claim 1, wherein each of the position limiting units (30) includes
a positioning recess (32) formed in a side portion of the base unit (11) and communicating with the first receiving space (13); and
a guiding protrusion (31) disposed on a side surface of the portable battery pack (20) and protruding in the positioning recess (32), such that the portable battery pack (20) is restrained from moving up and down by the two position limiting units (30).

3. The battery restraining structure as claimed in claim 1, wherein
the chassis (12) has a positioning hole (121) disposed adjacent to a rear end of the chassis (12); and
the stop unit (40A) includes a locking rod (41), and the locking rod (41) is mounted through a rear portion of the portable battery pack (20) and is slidable up and down;
wherein when the portable battery pack (20) is assembled in the first receiving space (13), the locking rod (41) is capable of sliding downward to insert into the positioning hole (121).

4. The battery restraining structure as claimed in claim 3, wherein
the locking rod (41) has two notches (42), and the notches (42) are separately formed in the locking rod (41) with one notch (42) disposed above the other notch (42); and
the stop unit (40A) further includes
a first compression spring (43) mounted around the locking rod (41);
a first retaining plate (431) mounted on the locking rod (41) and engaging in the notch (42) that is disposed closer to a lower end of the locking rod (41), wherein two opposite ends of the first compression spring (43) abut against the first retaining plate (431) and the portable battery pack (20) respectively; and
a second retaining plate (432) abutting against the portable battery pack (20);
wherein when the locking rod (41) is moved downward and the notch (42) that is disposed closer to an upper end of the locking rod (41) corresponds in position to a rear end of the second retaining plate (432), the second retaining plate (432) is capable of engaging in the notch (42) that is disposed closer to the upper end of the locking rod (41) to hold the locking rod (41) at a specific position.

5. The battery restraining structure as claimed in claim 4, wherein
the stop unit (40A) includes
a push button (44) disposed on the rear portion of the portable battery pack (20), being movable toward the locking rod (41), and abutting on the second retaining plate (432), wherein the push button (44) is capable of pushing the second retaining plate (432) toward the portable battery pack (20) to allow the second retaining plate (432) to disengage from the notch (42) that is disposed closer to the upper end of the locking rod (41); and
a second compression spring (441), and two opposite ends of the second compression spring (441) abut against the second retaining plate (432) and the portable battery pack (20) respectively; and
the portable battery pack (20) has a handle (21) mounted on the rear portion of the portable battery pack (20) .

6. The battery restraining structure as claimed in claim 1, wherein
the stop unit (40B) includes a limiting block (45), and the limiting block (45) is mounted on the chassis (12) and is disposed below the first receiving space (13); and
the chassis (12) has a through hole (122), and the through hole (122) is disposed adjacent to a rear end of the chassis (12) and communicates with the first receiving space (13);
wherein the limiting block (45) protrudes through the through hole (122) and abuts against a rear portion of the portable battery pack (20).

7. The battery restraining structure as claimed in claim 6, wherein the stop unit (40B) includes
a resilient element (46) disposed between a bottom surface of the chassis (12) and the limiting block (45); and
a pressing element (47) mounted on the rear end of the chassis (12) and abutting on the limiting block (45) ;
wherein when the pressing element (47) is pressed, the limiting block (45) is driven to move downward.

8. The battery restraining structure as claimed in claim 1, wherein
the base unit (11) has two limiting panels (14), and the two limiting panels (14) are formed on a front end of the base unit (11) and are disposed above the first receiving space (13); and
a diagonal recess (15) is formed between each of the limiting panels 14 and the chassis 12 for receiving the portable battery pack (20), wherein the two limiting panels (14) abut on an upper surface of the portable battery pack (20) .

9. The battery restraining structure as claimed in any one of claims 1 to 8, wherein
the battery restraining structure further comprises a spare battery pack (50), and the spare battery pack (50) has two locating recesses (51) separately arranged on an upper surface of the spare battery pack (50); and
the base unit (11) has
a second receiving space (16) disposed in front of the first receiving space (13); and
two locating protrusions (17) separately arranged above the second receiving space (16);
when the spare battery pack (50) is mounted in the second receiving space (16), the two locating protrusions (17) engage in the two locating recesses (51) respectively.

10. The battery restraining structure as claimed in claim 9, wherein the battery restraining structure further comprises
a first cover (111) pivotally mounted on the vehicle body (10) and being capable of covering the first receiving space (13);
a second cover (112) pivotally mounted on the vehicle body (10) and being capable of covering the second receiving space (16); and
a releasing portion (113) detachably engages with the second cover (112).
